# EUROPEAN PATENT APPLICATION

(11) **EP 4 803 396 A1**
(43) Date of publication of application: **09.09.2026**
(21) Application number: 26156045.2
(22) Date of filing: 03.02.2026
(51) Int. Cl.: B60W 50/00, B60W 50/14

(54) **METHOD OF CONTROLLING ACCESS TO VEHICLE FUNCTIONALITY, SYSTEM FOR IMPLEMENTING, AND VEHICLE**

(30) Priority: 05.03.2025 US 202519071662
(71) Applicant: Toyota Jidosha Kabushiki Kaisha, Toyota-shi, Aichi-ken 471-8571 (JP)
(72) Inventor: Takahiro, NAGAKARI, Tokyo, 103-0022 (JP)
(74) Representative: D Young & Co LLP

(57) **Abstract**

An aspect of this description relates to a method of controlling access to an advanced driver assistance system (ADAS) feature. The method includes determining a completion status of training associated with the ADAS feature by an operator of a vehicle. The method further includes prohibiting operation of the ADAS feature in response to a determination that the training associated with the ADAS feature is incomplete. The method further includes permitting the operator to access the ADAS feature in response to a determination that the training associated with the ADAS feature is complete.

## Description

### BACKGROUND

A vehicle operator is able to use advanced driver assistance systems (ADAS) in order to help operate the vehicle. ADAS include various functionalities such as adaptive cruise control (ACC), lane tracing assist (LTA), and other functionalities. These ADAS features are capable of being activated or deactivated by the vehicle operator. In some instances, the activation or deactivation of an ADAS functionality is performed using a touchscreen display in the vehicle or other actuators in the vehicle. The location of the activation and deactivation control varies between different vehicle models. Further, details in the performance of the ADAS functionality and display of information related to the performance of the ADAS functionality also varies between different vehicle models.

### SUMMARY

An aspect of this description relates to a method of controlling access to an advanced driver assistance system (ADAS) feature. The method includes determining a completion status of training associated with the ADAS feature by an operator of a vehicle. The method further includes prohibiting operation of the ADAS feature in response to a determination that the training associated with the ADAS feature is incomplete. The method further includes permitting the operator to access the ADAS feature in response to a determination that the training associated with the ADAS feature is complete.

An aspect of this description relates to a system for controlling access to an advanced driver assistance system (ADAS) feature. The system includes a non-transitory computer readable medium configured to store instructions thereon. The system further includes a processor connected to the non-transitory computer readable medium. The processor is configured to execute the instructions for determining a completion status of training associated with the ADAS feature by an operator of a vehicle. The processor is configured to execute the instructions for prohibiting operation of the ADAS feature in response to a determination that the training associated with the ADAS feature is incomplete. The processor is configured to execute the instructions for permitting the operator to access the ADAS feature in response to a determination that the training associated with the ADAS feature is complete.

An aspect of this description relates to a vehicle. The vehicle includes an advanced driver assistance system (ADAS), wherein the ADAS includes an ADAS feature. The vehicle further includes a non-transitory computer readable medium configured to store instructions thereon. The vehicle further includes a processor connected to the non-transitory computer readable medium and the ADAS. The processor is configured to execute the instructions for determining a completion status of training associated with the ADAS feature by an operator of a vehicle. The processor is configured to execute the instructions for prohibiting operation of the ADAS feature in response to a determination that the training associated with the ADAS feature is incomplete. The processor is configured to execute the instructions for permitting the operator to access the ADAS feature in response to a determination that the training associated with the ADAS feature is complete.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Figure 1 is a perspective view of a vehicle including a vehicle system, in accordance with some embodiments.
Figure 2 is a flowchart of a method of controlling access to an advanced driver assistance system (ADAS) feature, in accordance with some embodiments.
Figure 3 is a flowchart of a method of training a vehicle operator about using an ADAS feature, in accordance with some embodiments.
Figure 4 is a flowchart of a method of controlling access to an ADAS feature following an update of the ADAS feature, in accordance with some embodiments.
Figure 5 is a block diagram of a system for controlling access to an ADAS feature, in accordance with some embodiments.

### DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above" "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Advanced driver assistance systems (ADAS) are used in a variety of vehicles in order to assist an operator, also called a driver, during operation of a vehicle. The ADAS includes numerous types of features that provide different types of assistance to the operator. Examples of ADAS features include adaptive cruise control (ACC), lane tracing assist (LTA), lane change assist (LCA), highway navigation pilot (HNP), urban navigation pilot (UNP), and other ADAS features. Often the various ADAS features are able to be activated or deactivated by the operator in order to allow the driver to determine whether to utilize the ADAS features while operating the vehicle. Further, activation/deactivation of the ADAS features often involves actuation of a switch, button, location on a touchscreen, auditory signal, or other suitable activation/deactivation actuation option. These activation/deactivation options vary across different vehicle models. Similarly, details of control of the vehicle using the ADAS feature and information displayed related to the ADAS feature also vary across different vehicle models.

When an operator is unfamiliar with the ADAS feature in a certain vehicle model, the operator is more likely to accidentally activate the ADAS feature or fail to recognize that the ADAS feature is already activated. Conversely, the operator that is unfamiliar with the ADAS feature in the certain vehicle model has an increased risk of assuming that the ADAS feature is activated during a time when the ADAS feature is actually deactivated. The operator with a lack of familiarity with the ADAS feature also has a higher risk of confusion regarding the performance of the ADAS feature or information displayed related to the performance of the ADAS features. Due to at least the situations above, a lack of familiarity with the ADAS feature increases a risk of collision by the vehicle during operation of the vehicle.

In order to help reduce the risk of collision, the current description includes a method and a system for controlling access to ADAS features. The method locks each ADAS feature available in the vehicle until the operator has successfully completed a training associated with a corresponding ADAS feature. This training allows the operator to become more familiar with the ADAS feature so that the operator is less likely to accidentally activate the ADAS feature and is less likely to incorrectly assume that the ADAS feature is activated during a time when the ADAS feature is actually deactivated. The increased familiarity also helps to avoid confusion on the part of the operator during implementation of the ADAS feature and allows the operator to better understand the information displayed with respect to the ADAS feature. Thus, the training of the operator about the ADAS feature helps to reduce a risk of collision by the vehicle that includes the ADAS feature. Further, the locking of the ADAS feature prior to completion of the training reduces a risk of accidental activation of the ADAS feature in situations where the operator is unaware that the vehicle includes the ADAS feature.

In addition to reducing the risk of vehicle collision, the training for the use of ADAS features helps to increase a comfort level of the operator with the ADAS features. This will allow the operator to operate the vehicle in a more comfortable manner by utilizing functionalities of the vehicle in a manner consistent with the design of the ADAS features.

The method further includes aspects to help ensure that the training is performed while the vehicle has sufficient charge to perform the training; and that the vehicle is in a stable training state. These features help to further reduce a risk of collision during operation of the vehicle. The method further includes aspects associated with training for an ADAS feature following an update of the ADAS feature. During a lifetime of a vehicle, software updates often occur. These software updates potentially impact the activation/deactivation, performance of the ADAS feature, or display of information regarding the ADAS feature. In order to reduce potential confusion for the operator following an update impacting the ADAS feature, the method includes features that permit locking of the ADAS feature until updated training is completed.

The method permits storing of training material on an on-board vehicle system as well as retrieving training material from an external source, such as a server. The method further permits maintaining of training data based on operator identification instead of for the vehicle. In some embodiments, the training is performed using an infotainment system on-board the vehicle. In some embodiments, the training is performed using a mobile device accessible by the operator, where the mobile device is connected to the on-board vehicle system of the vehicle.

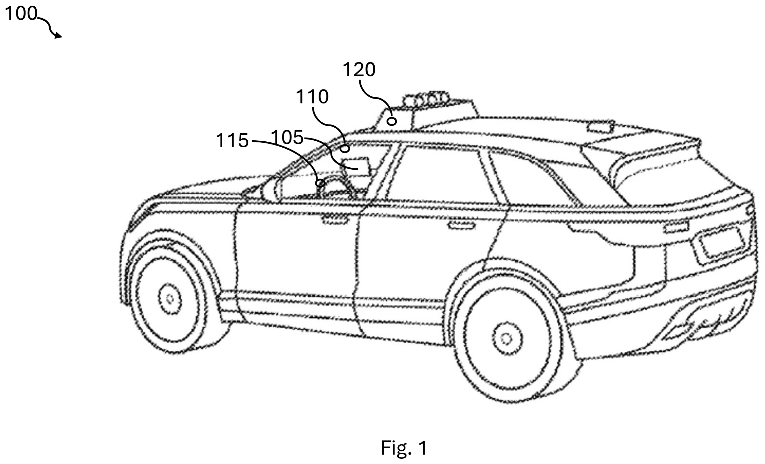

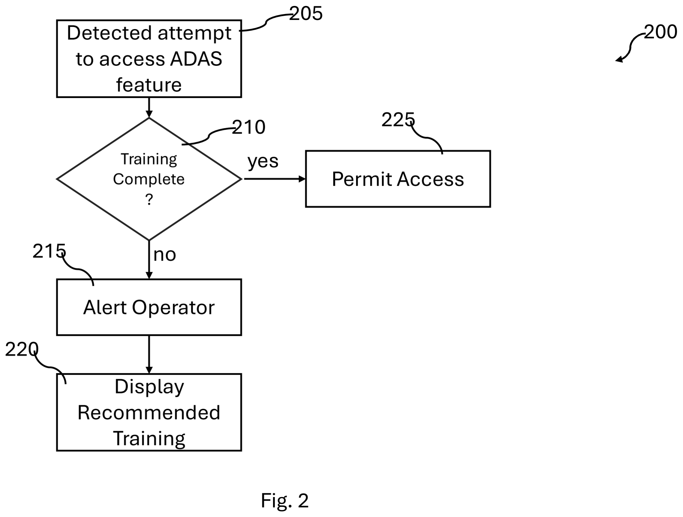

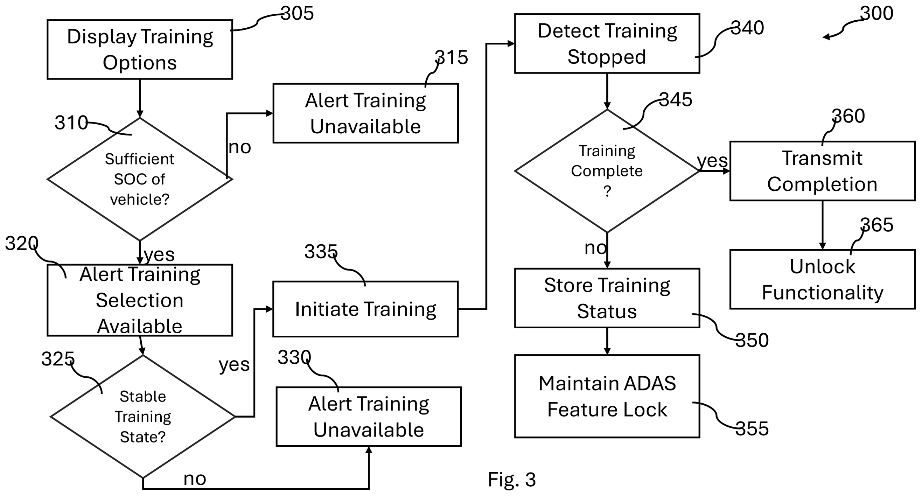

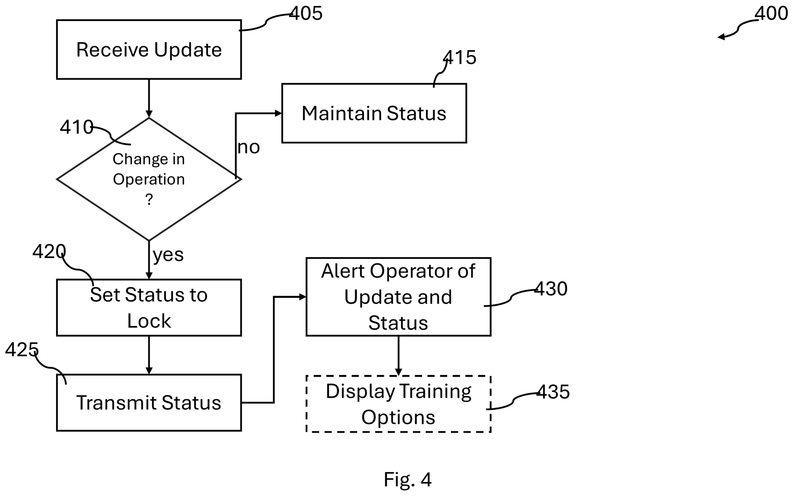

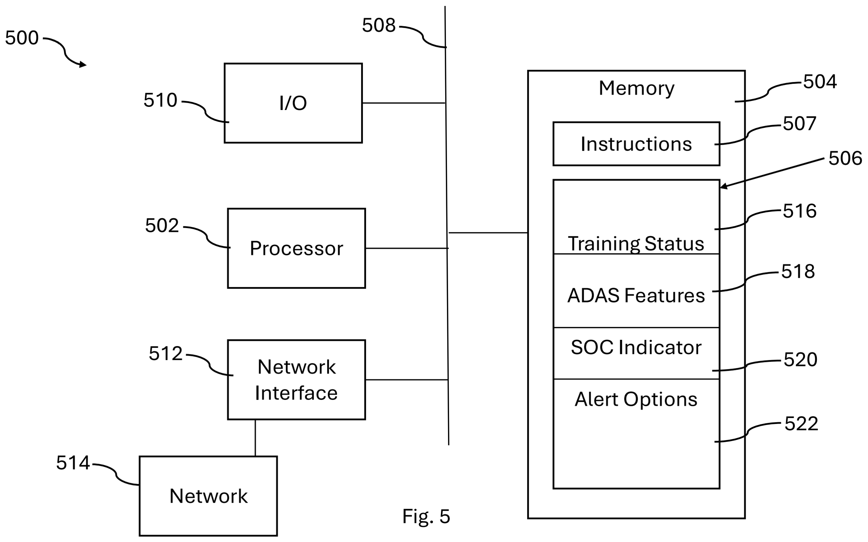

Figure 1 is a perspective view of a vehicle 100, in accordance with some embodiments. The vehicle 100 is capable of implementing the method 200 (Figure 2), method 300 (Figure 3) or method 400 (Figure 4). In some embodiments, the vehicle 100 is capable of implementing the method 200 (Figure 2), the method 300 (Figure 3) or the method 400 (Figure 4) using a system 500 (Figure 5) mounted in the vehicle. In some embodiments, the vehicle 100 is able to implement the method 200 (Figure 2), the method 300 (Figure 3) or the method 400 (Figure 4) based on receiving instructions from the system 500 (Figure 5) remote or separable from the vehicle 100. In some embodiments where the system 500 (Figure 5) is remote or separable from the vehicle 100, the vehicle 100 is configured to receive instructions for implementing the method 200 (Figure 2), the method 300 (Figure 3) or the method 400 (Figure 4) either wirelessly or via a wired connection.

The vehicle 100 includes an infotainment display 105. The vehicle further includes an optical sensor 110. The vehicle further includes a touch sensor 115. The vehicle further includes an external sensor 120. The vehicle 100 further includes a vehicle system, e.g., system 500 (Figure 5), configured to collect data from one or more of the optical sensor 110, the touch sensor 115 or the external sensor 120. The vehicle system is further capable of generating content for display on the infotainment display 105.

The infotainment display 105 is configured to display information viewable by occupants of the vehicle 100 including the operator of the vehicle 100. The content of the infotainment display 105 is controllable by the vehicle system. In some embodiments, the infotainment display 105 is controlled to display notifications to the operator of the vehicle in response to an attempt to access an ADAS feature in the vehicle. In some embodiments, the infotainment display 105 is capable of outputting audio signals as well as visual signals. In some embodiments, the infotainment display 105 is configured to display content from software applications executed by the vehicle system. In some embodiments, the infotainment display 105 includes a touchscreen. In some embodiments, the infotainment display 105 is configured to receive audio input using a microphone, input from one or more buttons or other suitable input devices. In some embodiments, the infotainment display 105 is configured to display training content related to ADAS features of the vehicle.

The optical sensor 110 is configured to detect at least a portion of an interior of the vehicle 100. The portion of the interior of the vehicle includes a driver's seat of the vehicle 100. The optical sensor 110 is configured to capture information indicating an action by the operator of the vehicle or an identity of the operator of the vehicle. In some embodiments, the optical sensor 110 includes a camera, an infrared (IR) detector, or other suitable optical detectors. In some embodiments, the optical sensor 110 is configured to capture information, such as an image, of one or more eye of the operator of the vehicle. In some embodiments, the optical sensor 110 is further configured to capture information related to an environment external to the vehicle 100. In some embodiments, the information related to the environment external to the vehicle 100 includes relative location of lane markers, road signs, sidewalls, traffic lights, other vehicle or other suitable external elements. In some embodiments, multiple optical sensors 110 are mounted in the vehicle.

The touch sensor 115 is configured to determine whether the operator of the vehicle 100 is contacting a steering wheel of the vehicle 100. In some embodiments, the touch sensor 115 includes a capacitive touch sensor or other suitable touch sensor. In some embodiments, multiple touch sensors 115 are mounted on the steering wheel. In some embodiments, the touch sensor 115 is configured to receive biometric data related to an identity of the operator of the vehicle, such as a fingerprint.

The external sensor 115 is configured to detect at least a portion of the external environment of the vehicle 100. The external sensor 120 is configured to capture information indicating a relative position between the vehicle and objects in the environment external to the vehicle. In some embodiments, the external sensor 120 includes a camera, an IR detector, a light detection and ranging (LIDAR) detector, or other suitable detectors. In some embodiments, the information related to the environment external to the vehicle 100 includes relative location of lane markers, road signs, sidewalls, traffic lights, other vehicles or other suitable external elements. In some embodiments, multiple external sensors 120 are mounted on the vehicle.

The vehicle 100 further includes an ADAS system controllable by the vehicle system, e.g. system 500 (Figure 5). In some embodiments, the ADAS system includes features such as adaptive cruise control (ACC), lane tracing assist (LTA), lane change assist (LCA), highway navigation pilot (HNP), urban navigation pilot (UNP), or other suitable ADAS features. One of ordinary skill in the art would understand that one or more of the ADAS features include an ability to control a speed of the vehicle 100 as well as a steering of the vehicle 100. In some embodiments, the ADAS system is capable of control ranging from ADAS Level 1 control to ADAS Level 5 control.

The vehicle system, e.g., system 500 (Figure 5) is configured to receive information from the various sensors in the vehicle 100 in order to implement the method 200 (Figure 2), the method 300 (Figure 3) or the method 400 (Figure 4). The vehicle system is configured to use this information to control access to the ADAS features in the vehicle. The vehicle system is further configured to control ADAS features of the vehicle 100 based on a determined status of the operator of the vehicle 100.

One of ordinary skill in the art would recognize that different sizes of vehicles having different controls and features are within the scope of this description. For example, in some embodiments, the vehicle 100 does not include an infotainment display 105; or the vehicle 100 includes a heads up display (HUD).

Figure 2 is a flowchart of a method 200 of controlling access to an ADAS feature, in accordance with some embodiments. In some embodiments, the method 200 is implemented for controlling access to an ADAS feature of the vehicle 100 (Figure 1). In some embodiments, the method 200 is implemented individually for each ADAS feature available in the vehicle 100 (Figure 1). In some embodiments, the method 200 is implemented by the vehicle system of the vehicle 100 (Figure 1). In some embodiments, the method 200 is at least partially implemented by a system remote from the vehicle 100 (Figure 1) and instructions are sent to the vehicle system of the vehicle 100 based on execution of the method 200. In some embodiments, the method 200 is implemented in conjunction with the method 300 (Figure 3) or the method 400 (Figure 4).

In operation 205, an attempt to access an ADAS feature is detected. In some embodiments, the detection is based on receiving actuation of a switch, button, touchscreen region, or other suitable physical actuation. In some embodiments, the detection is based on an auditory signal detected by a microphone in the vehicle. In some embodiments, the detection is based on a gesture by the operator. In some embodiments, the detection is performed by the infotainment display 105 (Figure 1), the optical sensor 110 (Figure 1), the touch sensor 115 (Figure 1), or another suitable sensor within the vehicle.

In operation 210, a determination is made regarding whether training for the ADAS feature attempted to be accessed is completed. Based on the detected attempt to access the ADAS feature, the vehicle system identifies the corresponding ADAS feature. The vehicle system then compares the corresponding ADAS feature with training completion data to determine whether training for the ADAS feature was completed. In some embodiments, the vehicle system further determines whether the training for the ADAS feature was completed based on an identity of the operator attempting to access the ADAS feature. In some embodiments, the identify of the operator is determined based on a selection of a profile within the vehicle by the operator, e.g., using the infotainment display 105 (Figure 1), optical recognition of the operator, e.g., using the optical sensor 110 (Figure 1), biometric data of the operator, e.g., using the touch sensor 115 (Figure 1), or other suitable identification processes. In response to a determination that training for the corresponding ADAS feature was completed by the operator, the method 200 proceeds to operation 225. In response to a determination that training for the corresponding ADAS feature was not completed by the operator, the method 200 proceeds to operation 215.

In some embodiments, access to the ADAS feature is permitted by allowing an application programming interface (API) associated with the ADAS feature to allow communication between the vehicle system and software associated with the ADAS feature. In some embodiments, each ADAS feature has a corresponding API to control communication between the vehicle system and the ADAS feature.

In operation 215, an alert is generated for the operator. In some embodiments, the alert includes a notification that the training for the ADAS feature associated with the detection in operation 205 is not completed. In some embodiments, the alert includes a display in the vehicle, such as by the infotainment display 105 (Figure 1). In some embodiments, the alert includes an auditory alert, e.g., output by a speaker in the vehicle. In some embodiments, the alert includes a tactile alert in a seat of the operator, the steering wheel, or another suitable location within the vehicle. In some embodiments, the alert includes transmitting a signal to a mobile device accessible by the operator for causing the mobile device to generate a visual and/or audible notification. In some embodiments, the alert includes a combination of the notification options discussed above or other suitable alerts.

In operation 220, recommended training for the operator is displayed. The recommended training for the operator includes training for the ADAS feature associated with the detection in operation 205. In some embodiments, the recommended training is displayed on the infotainment display 105 (Figure 1). In some embodiments, the vehicle system transmits a signal to a mobile device accessible by the operator to cause the mobile device to display the recommended training. In some embodiments, the display of recommended training includes a listing of one or more training courses associated with the ADAS feature. In some embodiments, the display of recommended training includes an indication of a status of each of the one more training course, e.g., whether each of the one or more training courses is completed. In some embodiments, the display of recommended training includes an indication of a progress, such as percentage completed, for each of the one or more training courses. In some embodiments, the recommended training includes a notification that an update to the ADAS feature has occurred to allow the operator to recognize that a previously accessible ADAS feature is no longer accessible until an updated training is completed.

In operation 225, access to the ADAS feature is permitted. The ADAS feature associated with the detection in operation 105 is activated in operation 225. In some embodiments, a confirmation of activation signal is generated in operation 225. In some embodiments, the confirmation of activation includes a display, e.g., on the infotainment display 105 (Figure 1), an auditory signal, a visual signal or another suitable confirmation signal. The ADAS feature activated in operation 225 remains in operation until the ADAS feature is deactivated in accordance with operating conditions of the specific ADAS feature, e.g., pressing of a brake pedal for an ACC ADAS feature.

One of ordinary skill in the art would understand that modifications to the method 200 are within the scope of this description. In some embodiments, the method 200 includes at least one additional operation. For example, in some embodiments, the method 200 further includes confirming an identity of the operator. In some embodiments, at least one of the operations of the method 200 is omitted. For example, in some embodiments, the operation 220 is omitted. In some embodiments, an order of operations of the method 200 is changed. For example, in some embodiments, the operation 220 is performed prior to the operation 215 or simultaneous with the operation 215.

Figure 3 is a flowchart of a method 300 of training a vehicle operator about using an ADAS feature, in accordance with some embodiments. In some embodiments, the method 300 is implemented for training relative to an ADAS feature of the vehicle 100 (Figure 1). In some embodiments, the method 300 is implemented individually for each ADAS feature available in the vehicle 100 (Figure 1). In some embodiments, the method 300 is implemented by the vehicle system of the vehicle 100 (Figure 1). In some embodiments, the method 300 is at least partially implemented by a system remote from the vehicle 100 (Figure 1) and instructions are sent to the vehicle system of the vehicle 100 based on execution of the method 300. In some embodiments, the method 300 is implemented in conjunction with the method 200 (Figure 2) or the method 400 (Figure 4).

In operation 305, training options are displayed for the operator. In some embodiments, the training options are displayed on a display mounted in the vehicle, e.g., infotainment display 105 (Figure 1). In some embodiments, the vehicle system transmits a signal to a mobile device accessible by the operator to cause the mobile device to display the training options. In some embodiments, the display of training options includes a listing of one or more training courses associated with the ADAS feature. In some embodiments, the display of training options includes an indication of a status of each of the one more training courses, e.g., whether each of the one or more training courses is completed. In some embodiments, the display of training options includes an indication of a progress, such as percentage completed, for each of the one or more training courses. In some embodiments, the training options includes a notification that an update to the ADAS feature has occurred to allow the operator to recognize that a previously accessible ADAS feature is no longer accessible until an updated training is completed.

In operation 310, a determination is made regarding whether the vehicle has a sufficient state of charge (SOC) to complete a training course in response to detection of selection of the training course. In some embodiments, the detection of the selection of the training course includes a signal received at a touchscreen, e.g., infotainment display 105 (Figure 1). In some embodiments, the detection of the selection of the training source is received by the vehicle system based on a signal transmitted from a mobile device accessible by the operator. In some embodiments, the selection of the training course is determined based on an auditory signal, a detected gesture by the operator, or another suitable type of signal.

In response to identifying a selected training course, a determination is made regarding an amount of charge that will be consumed for the operator to complete the training course. In some embodiments, the consideration of the amount of charge includes a consumption of charge expected for displaying audio and visual signals associated with the training course. In some embodiments, the consideration of the amount of charge includes maintaining a comfortable environment in the vehicle, e.g., through heating or cooling the vehicle, during the completion of the training course. In some embodiments, the consideration of the amount of charge includes a determination of a distance to a charging station and whether the vehicle is capable of reaching the charging station following completion of the training course. If the SOC of the vehicle at the time of the selection of the training course is within a threshold buffer value from the amount of charge consumed by the vehicle to complete the training course, the vehicle is determined to have insufficient SOC. In some embodiments, the buffer value includes 5% to 10% of a maximum charge capacity of the vehicle. That is, in some embodiments, the vehicle will have less than 5% to 10% SOC following completion of the training course, the vehicle is determined to have insufficient SOC.

While the consideration of SOC is often associated with electric vehicles (EVs), one of ordinary skill in the art would understand that a similar consideration of available fuel is within the scope of this description for gas powered vehicles, hybrid vehicles, fuel cell vehicles or other types of vehicles.

In response to a determination that the vehicle has insufficient SOC, the method 300 proceeds to operation 315. In response to a determination that the vehicle has sufficient SOC, the method 300 proceeds to operation 320.

In operation 315, an alert is generated to notify the operator that the selected training is unavailable. In some embodiments, the alert includes a notification that the selected training is unavailable due to the SOC of the vehicle. In some embodiments, the notification includes a recommendation to charge the vehicle. In some embodiments, the notification includes information, such as a map, for nearby charging stations. In some embodiments, the notification includes information indicating minimum SOC for initiating the selected training. In some embodiments, the alert includes a display in the vehicle, such as by the infotainment display 105 (Figure 1). In some embodiments, the alert includes an auditory alert, e.g., output by a speaker in the vehicle. In some embodiments, the alert includes a tactile alert in a seat of the operator, the steering wheel, or another suitable location within the vehicle. In some embodiments, the alert includes transmitting a signal to a mobile device accessible by the operator for causing the mobile device to generate a visual and/or audible notification. In some embodiments, the alert includes a combination of the notification options discussed above or other suitable alerts.

In operation 320, an alert is generated to notify the operator that the selected training is available. In some embodiments, the alert includes a notification that the vehicle has sufficient SOC to initiate the selected training. In some embodiments, the notification includes a recommendation to move the vehicle to a stable training state. In some embodiments, the notification includes information, such as a map, for nearby location where the vehicle is able to stop. In some embodiments, the notification includes information indicating minimum SOC for initiating the selected training. In some embodiments, the alert includes a display in the vehicle, such as by the infotainment display 105 (Figure 1). In some embodiments, the alert includes an auditory alert, e.g., output by a speaker in the vehicle. In some embodiments, the alert includes a tactile alert in a seat of the operator, the steering wheel, or another suitable location within the vehicle. In some embodiments, the alert includes transmitting a signal to a mobile device accessible by the operator for causing the mobile device to generate a visual and/or audible notification. In some embodiments, the alert includes a combination of the notification options discussed above or other suitable alerts.

In operation 325 a determination is made regarding whether the vehicle is in a stable training state. A stable training state indicates that an operator is able to experience the selected training without an increased risk of collision by the vehicle. In some embodiments, the stable training state indicates that the vehicle is not currently traveling. In some embodiments, the stable training state indicates that a transmission of the vehicle is in PARK. In some embodiments, the stable training state indicates that the vehicle is connected to a charging station. In some embodiments, the stable training state indicates that the vehicle is stopped at a location off of an active roadway, such as a driveway or parking lot.

In response to a determination that the vehicle is in a stable training state, the method 300 proceeds to operation 335. In response to a determination that the vehicle is not in a stable training state, the method 300 proceeds to operation 330.

In operation 330, an alert is generated to notify the operator that training is not available. In some embodiments, the alert includes a notification that the vehicle is not in a stable training state. In some embodiments, the notification includes a recommendation to move the vehicle to a stable training state. In some embodiments, the notification includes information, such as a map, for nearby location where the vehicle is able to stop. In some embodiments, the notification includes information indicating criteria for placing the vehicle in a stable training state. In some embodiments, the alert includes a display in the vehicle, such as by the infotainment display 105 (Figure 1). In some embodiments, the alert includes an auditory alert, e.g., output by a speaker in the vehicle. In some embodiments, the alert includes a tactile alert in a seat of the operator, the steering wheel, or another suitable location within the vehicle. In some embodiments, the alert includes transmitting a signal to a mobile device accessible by the operator for causing the mobile device to generate a visual and/or audible notification. In some embodiments, the alert includes a combination of the notification options discussed above or other suitable alerts. In some embodiments, in response to the vehicle achieving a stable training state following the alert in operation 330, the method 300 proceeds to operation 335. In some embodiments, in response to the vehicle achieving a stable training state following the alert in operation 330, the method 300 returns to operation 305.

In operation 335, the training is initiated. The training is displayed to the operator. In some embodiments, the training is displayed using a screen mounted in the vehicle, e.g., the infotainment display 105 (Figure 1). In some embodiments, the training is displayed using a mobile device accessible to the operator, where the mobile device is in communication with the vehicle system of the vehicle. In some embodiments, the training includes an instructional video. In some embodiments, the training includes at least one question for the operator regarding the content of the training. In some embodiments, a determination of whether the operator answers the one or more questions correctly is used in determining whether the operator completed the training.

In operation 340, the training is detected to have stopped. In some embodiments, the training is stopped based on a detected input from the operator. In some embodiments, the detected input includes an interaction with a touchscreen, e.g., the infotainment display 105 (Figure 1). In some embodiments, the detected input includes an interaction with the mobile device accessible by the user. In some embodiments, the detected input includes actuation of a button, switch or other control within the vehicle. In some embodiments, the detected input includes an auditory signal, an operator gesture or other suitable signal. In some embodiments, the training is stopped because an end of the training content is reached and the training content automatically stops. In some embodiments, the training is stopped due to a power interruption to a device displaying the training content.

In operation 345, a determination is made regarding whether the training is complete. In some embodiments, the determination is made that the training is complete in response to the training content stopping due to reaching the end of the training content. In some embodiments, the training content is determined to be complete in response to receiving correct answers to one or more questions associated with the training content. In some embodiments, the training is determined to be complete in response to the operator stopping the training content after completion of a predetermined portion of the training content is displayed. In some embodiments, the ADAS feature includes multiple training modules. In some embodiments, a determination of training completion is based on whether all of the multiple training modules are completed.

In some embodiments, the predetermined portion is at least 95% of the training content. In response to a determination that the training is complete, the method 300 proceeds to operation 360. In response to a determination that the training is incomplete, the method 300 proceeds to operation 350.

In operation 350, a training status is stored. The training status indicates which portion of the training content has been displayed. The training status is stored in a memory device accessible by the vehicle system. In some embodiments, the memory device is mounted in the vehicle. In some embodiments, the memory device is remote from the vehicle and is accessible via a wireless connection. In some embodiments, the training status is stored in conjunction with the identity of the operator to whom the training content was displayed.

In operation 355, the ADAS feature is maintained as locked. That is, the ADAS feature is not accessible by the operator because the operator has not completed the training associated with the ADAS feature.

In operation 360, a training completion signal is transmitted. The training completion signal indicates that the operator has completed the training associated with the ADAS feature. The training completion is stored in a memory device accessible by the vehicle system. In some embodiments, the memory device is mounted in the vehicle. In some embodiments, the memory device is remote from the vehicle and is accessible via a wireless connection. In some embodiments, the training status is stored in conjunction with the identity of the operator to whom the training content was displayed.

In operation 365, the ADAS feature is unlocked. That is, the ADAS feature becomes accessible by the operator because the operator has completed the training associated with the ADAS feature. The operator is able to activate the ADAS feature based on the information conveyed during the training.

One of ordinary skill in the art would understand that modifications to the method 300 are within the scope of this description. In some embodiments, the method 300 includes at least one additional operation. For example, in some embodiments, the method 300 further includes recommending a next training following completion of a training. In some embodiments, at least one of the operations of the method 300 is omitted. For example, in some embodiments, the operation 315 is omitted. In some embodiments, an order of operations of the method 300 is changed. For example, in some embodiments, the operation 355 is performed prior to the operation 350.

Figure 4 is a flowchart of a method 400 of controlling access to an ADAS feature following an update of the ADAS feature, in accordance with some embodiments. In some embodiments, the method 400 is implemented for training relative to an ADAS feature of the vehicle 100 (Figure 1). In some embodiments, the method 400 is implemented individually for each ADAS feature available in the vehicle 100 (Figure 1). In some embodiments, the method 400 is implemented by the vehicle system of the vehicle 100 (Figure 1). In some embodiments, the method 400 is at least partially implemented by a system remote from the vehicle 100 (Figure 1) and instructions are sent to the vehicle system of the vehicle 100 based on execution of the method 400. In some embodiments, the method 400 is implemented in conjunction with the method 200 (Figure 2) or the method 300 (Figure 3).

In operation 405, an update for at least one ADAS feature is received. The vehicle system receives the update and installs the update. The vehicle system stores information related to the update in a memory device. In some embodiments, the memory device is mounted in the vehicle. In some embodiments, the memory device is remote from the vehicle. In some embodiments, the update is received via a wireless connection. In some embodiments, the update is received via a wired connection. In some embodiments, the update includes a change for a single ADAS feature. In some embodiments, the update includes changes for multiple ADAS features. In some embodiments, the update includes additional training content associated with at least one ADAS feature.

In operation 410, a determination is made regarding whether the update constitutes a change in operation for at least one ADAS feature. A change in operation includes a change in activation/deactivation of the ADAS feature, a change in performance of the ADAS feature identifiable by the operator, a change in display of information associated with performance of the ADAS feature, a change in training content associated with the ADAS feature, or other suitable changes to the ADAS feature that are identifiable by the operator. Examples of updates to the ADAS feature that are not identifiable by the operator include changes in storage of log data, changes in compression of received data, or other suitable changes that are not identifiable by the operator.

In response to a determination that the update includes a change in the operation of the ADAS feature, the method 400 proceeds to operation 420. In response to a determination that the update does not include a change in the operation of the ADAS feature, the method 400 proceeds to operation 415.

In operation 415, a current status of the ADAS feature is maintained. Maintaining the current status means that if the ADAS feature was accessible to the operator prior to receiving the update in operation 405, the operator continues to have access to the ADAS feature. Maintaining the current status also means that if the ADAS feature was inaccessible by the operator prior to receiving the update in operation 405, the ADAS feature continues to be inaccessible to the operator.

In operation 420, a status of the ADAS feature is set to lock. The ADAS feature is inaccessible to the operator regardless of a prior status of the ADAS feature.

In operation 425, the status of the ADAS feature is transmitted for storage. The status of the ADAS feature is stored in a memory device accessible by the vehicle system. In some embodiments, the memory device is mounted in the vehicle. In some embodiments, the memory device is remote from the vehicle and is accessible via a wireless connection.

In operation 430, an alert is generated to notify the operator of the update to the ADAS feature and that the status of the ADAS feature is locked. In some embodiments, the alert includes a notification that the status of the ADAS feature changed in response to the ADAS feature being accessible by the operator prior to receiving the update in operation 405. In some embodiments, the alert includes a display in the vehicle, such as by the infotainment display 105 (Figure 1). In some embodiments, the alert includes an auditory alert, e.g., output by a speaker in the vehicle. In some embodiments, the alert includes a tactile alert in a seat of the operator, the steering wheel, or another suitable location within the vehicle. In some embodiments, the alert includes transmitting a signal to a mobile device accessible by the operator for causing the mobile device to generate a visual and/or audible notification. In some embodiments, the alert includes a combination of the notification options discussed above or other suitable alerts.

In operation 435, training options are displayed for the operator. In some embodiments, the operation 435 is omitted. In some embodiments, the training options include a designation for new training received as part of the update in operation 405. In some embodiments, the training options are displayed on a display mounted in the vehicle, e.g., infotainment display 105 (Figure 1). In some embodiments, the vehicle system transmits a signal to a mobile device accessible by the operator to cause the mobile device to display the training options. In some embodiments, the display of training options includes a listing of one or more training courses associated with the ADAS feature. In some embodiments, the display of training options includes an indication of a status of each of the one more training courses, e.g., whether each of the one or more training courses is completed. In some embodiments, the display of training options includes an indication of a progress, such as percentage completed, for each of the one or more training courses. In some embodiments, the training options includes a notification that an update to the ADAS feature has occurred to allow the operator to recognize that a previously accessible ADAS feature is no longer accessible until an updated training is completed.

One of ordinary skill in the art would understand that modifications to the method 400 are within the scope of this description. In some embodiments, the method 400 includes at least one additional operation. For example, in some embodiments, the method 400 further includes notifying the operator of receipt of an update regardless of whether the update changes an operation of any ADAS feature. In some embodiments, at least one of the operations of the method 400 is omitted. For example, in some embodiments, the operation 435 is omitted. In some embodiments, an order of operations of the method 400 is changed. For example, in some embodiments, the operation 430 is performed prior to the operation 425.

Figure 5 is a block view of a system 500 for controlling access to an ADAS feature in accordance with one or more embodiments. System 500 includes a hardware processor 502 and a non-transitory, computer readable storage medium 504 encoded with, i.e., storing, the computer program code 506, i.e., a set of executable instructions. Computer readable storage medium 504 is also encoded with instructions 507 for interfacing with manufacturing machines for producing the memory array. The processor 502 is electrically coupled to the computer readable storage medium 504 via a bus 508. The processor 502 is also electrically coupled to an input/output (I/O) interface 510 by bus 508. A network interface 512 is also electrically connected to the processor 502 via bus 508. Network interface 512 is connected to a network 514, so that processor 502 and computer readable storage medium 504 are capable of connecting to external elements via network 514. The processor 502 is configured to execute the computer program code 506 encoded in the computer readable storage medium 504 in order to cause system 500 to be usable for performing a portion or all of the operations as described in method 200 (Figure 2), method 300 (Figure 3), method 400 (Figure 4) or implemented by the vehicle 100 (Figure 1).

In some embodiments, the processor 502 is a central processing unit (CPU), a multi-processor, a distributed processing system, an application specific integrated circuit (ASIC), and/or a suitable processing unit.

In some embodiments, the computer readable storage medium 504 is an electronic, magnetic, optical, electromagnetic, infrared, and/or a semiconductor system (or apparatus or device). For example, the computer readable storage medium 504 includes a semiconductor or solid-state memory, a magnetic tape, a removable computer diskette, a random access memory (RAM), a read-only memory (ROM), a rigid magnetic disk, and/or an optical disk. In some embodiments using optical disks, the computer readable storage medium 504 includes a compact disk-read only memory (CD-ROM), a compact disk-read/write (CD-R/W), and/or a digital video disc (DVD).

In some embodiments, the storage medium 504 stores the computer program code 504 configured to cause system 500 to perform a portion or all of the operations as described in method 200 (Figure 2), method 300 (Figure 3), method 400 (Figure 4) or implemented by the vehicle 100 (Figure 1). In some embodiments, the storage medium 504 also stores information used for performing a portion or all of the operations as described in method 200 (Figure 2), method 300 (Figure 3), method 400 (Figure 4) or implemented by the vehicle 100 (Figure 1) as well as information generated during performing a portion or all of the operations as described in method 200 (Figure 2), method 300 (Figure 3), method 400 (Figure 4) or implemented by the vehicle 100 (Figure 1), such as a training status data parameter 516, an ADAS features parameter 518, a SOC indicator parameter 520, an alert options parameter 522, and/or a set of executable instructions to perform the operation of a portion or all of the operations as described in method 200 (Figure 2), method 300 (Figure 3), method 400 (Figure 4) or implemented by the vehicle 100 (Figure 1).

In some embodiments, the storage medium 504 stores instructions 507 for interfacing with external devices, e.g., mobile devices. The instructions 507 enable processor 502 to generate or receive instructions readable by the external devices during implementation of a portion or all of the operations as described in method 200 (Figure 2), method 300 (Figure 3), method 400 (Figure 4) or implemented by the vehicle 100 (Figure 1).

System 500 includes I/O interface 510. I/O interface 510 is coupled to external circuitry. In some embodiments, I/O interface 510 includes a keyboard, keypad, mouse, trackball, trackpad, touch screen and/or cursor direction keys for communicating information and commands to processor 502.

System 500 also includes network interface 512 coupled to the processor 502. Network interface 512 allows system 500 to communicate with network 514, to which one or more other computer systems are connected. Network interface 512 includes wireless network interfaces such as BLUETOOTH, WIFI, WIMAX, GPRS, or WCDMA; or wired network interface such as ETHERNET, USB, or IEEE-1394. In some embodiments, a portion or all of the operations as described in method 200 (Figure 2), method 300 (Figure 3), method 400 (Figure 4) or implemented by the vehicle 100 (Figure 1) is implemented in two or more systems 500, and information such as training status, ADAS features, SOC indicators, or alert options are exchanged between different systems 500 via network 514.

### Supplemental Note 1

An aspect of this description relates to a method of controlling access to an advanced driver assistance system (ADAS) feature. The method includes determining a completion status of training associated with the ADAS feature by an operator of a vehicle. The method further includes prohibiting operation of the ADAS feature in response to a determination that the training associated with the ADAS feature is incomplete. The method further includes permitting the operator to access the ADAS feature in response to a determination that the training associated with the ADAS feature is complete.

### Supplemental Note 2

The method of Supplemental Note 1, further including capturing identification information of the operator using at least one sensor, wherein the determining the completion status is based on an identity of the operator.

### Supplemental Note 3

The method of Supplemental Note 1 or 2, wherein the ADAS feature includes at least one of adaptive cruise control (ACC), lane tracing assist (LTA), lane change assist (LCA), highway navigation pilot (HNP), or urban navigation pilot (UNP).

### Supplemental Note 4

The method of any of Supplemental Notes 1 to 3, further including receiving a selection of a training content; determining whether initiating of the training content is permissible; generating an alert in response to a determination that initiating the training content is impermissible; and initiating the training content in response to a determination that initiating the training is permissible.

### Supplemental Note 5

The method of any of Supplemental Notes 1 to 4, wherein determining whether initiating the training content is permissible is based on at least one of a state of charge (SOC) for the vehicle or a determination regarding whether the vehicle is in a stable training state.

### Supplemental Note 6

The method of any of Supplemental Notes 1 to 5, wherein initiating the training comprises causing the training content to be displayed on at least one of a display mounted in the vehicle or a mobile device accessible by the operator.

### Supplemental Note 7

The method of any of Supplemental Notes 1 to 6, further including updating a status of the ADAS feature to permit the operator to access the ADAS feature in response to completion of the training content; and storing the updated status of the ADAS feature in a memory device.

### Supplemental Note 8

An aspect of this description relates to a system for controlling access to an advanced driver assistance system (ADAS) feature. The system includes a non-transitory computer readable medium configured to store instructions thereon. The system further includes a processor connected to the non-transitory computer readable medium. The processor is configured to execute the instructions for determining a completion status of training associated with the ADAS feature by an operator of a vehicle. The processor is configured to execute the instructions for prohibiting operation of the ADAS feature in response to a determination that the training associated with the ADAS feature is incomplete. The processor is configured to execute the instructions for permitting the operator to access the ADAS feature in response to a determination that the training associated with the ADAS feature is complete.

### Supplemental Note 9

The system of Supplemental Note 8, wherein the processor is further configured to execute the instructions for capturing identification information of the operator using at least one sensor, wherein the determining the completion status is based on an identity of the operator.

### Supplemental Note 10

The system of Supplemental Note 8 or 9, wherein the ADAS feature includes at least one of adaptive cruise control (ACC), lane tracing assist (LTA), lane change assist (LCA), highway navigation pilot (HNP), or urban navigation pilot (UNP).

### Supplemental Note 11

The system of an of Supplemental Notes 8 to 10, wherein the processor is further configured to execute the instructions for receiving a selection of a training content; determining whether initiating of the training content is permissible; generating an alert in response to a determination that initiating the training content is impermissible; and initiating the training content in response to a determination that initiating the training is permissible.

### Supplemental Note 12

The system of any of Supplemental Notes 8 to 11, wherein determining whether initiating the training content is permissible is based on at least one of a state of charge (SOC) for the vehicle or a determination regarding whether the vehicle is in a stable training state.

### Supplemental Note 13

The system of any of Supplemental Notes 8 to 12, wherein initiating the training comprises causing the training content to be displayed on at least one of a display mounted in the vehicle or a mobile device accessible by the operator.

### Supplemental Note 14

The system of any of Supplemental Notes 8 to 13, wherein the processor is further configured to execute the instructions for updating a status of the ADAS feature to permit the operator to access the ADAS feature in response to completion of the training content; and storing the updated status of the ADAS feature in a memory device.

### Supplemental Note 15

An aspect of this description relates to a vehicle. The vehicle includes an advanced driver assistance system (ADAS), wherein the ADAS includes an ADAS feature. The vehicle further includes a non-transitory computer readable medium configured to store instructions thereon. The vehicle further includes a processor connected to the non-transitory computer readable medium and the ADAS. The processor is configured to execute the instructions for determining a completion status of training associated with the ADAS feature by an operator of a vehicle. The processor is configured to execute the instructions for prohibiting operation of the ADAS feature in response to a determination that the training associated with the ADAS feature is incomplete. The processor is configured to execute the instructions for permitting the operator to access the ADAS feature in response to a determination that the training associated with the ADAS feature is complete.

### Supplemental Note 16

The vehicle of Supplemental Note 15, wherein the processor is further configured to execute the instructions for capturing identification information of the operator using at least one sensor, wherein the determining the completion status is based on an identity of the operator.

### Supplemental Note 17

The vehicle of Supplemental Note 15 or 16, wherein the ADAS feature includes at least one of adaptive cruise control (ACC), lane tracing assist (LTA), lane change assist (LCA), highway navigation pilot (HNP), or urban navigation pilot (UNP).

The vehicle of any of Supplemental Notes 15 to 17, wherein the processor is further configured to execute the instructions for receiving a selection of a training content; determining whether initiating of the training content is permissible; generating an alert in response to a determination that initiating the training content is impermissible; and initiating the training content in response to a determination that initiating the training is permissible.

### Supplemental Note 19

The vehicle of any of Supplemental Notes 15 to 18, further including a display, wherein initiating the training comprises causing the training content to be displayed on at least one of the display or a mobile device accessible by the operator, and determining whether initiating the training content is permissible is based on at least one of a state of charge (SOC) for the vehicle or a determination regarding whether the vehicle is in a stable training state.

### Supplemental Note 20

The vehicle of any of Supplemental Notes 15 to 19, wherein the processor is further configured to execute the instructions for updating a status of the ADAS feature to permit the operator to access the ADAS feature in response to completion of the training content; and storing the updated status of the ADAS feature in a memory device.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A method of controlling access to an advanced driver assistance system (ADAS) feature, the method comprising:
determining a completion status of training associated with the ADAS feature by an operator of a vehicle;
prohibiting operation of the ADAS feature in response to a determination that the training associated with the ADAS feature is incomplete; and
permitting the operator to access the ADAS feature in response to a determination that the training associated with the ADAS feature is complete.

2. The method of claim 1, further comprising:
capturing identification information of the operator using at least one sensor, wherein the determining the completion status is based on an identity of the operator.

3. The method of claim 1 or 2, wherein the ADAS feature includes at least one of adaptive cruise control (ACC), lane tracing assist (LTA), lane change assist (LCA), highway navigation pilot (HNP), or urban navigation pilot (UNP).

4. The method of any one of claims 1 to 3, further comprising:
receiving a selection of a training content;
determining whether initiating of the training content is permissible;
generating an alert in response to a determination that initiating the training content is impermissible; and
initiating the training content in response to a determination that initiating the training is permissible.

5. The method of claim 4, wherein determining whether initiating the training content is permissible is based on at least one of a state of charge (SOC) for the vehicle or a determination regarding whether the vehicle is in a stable training state.

6. The method of claim 4 or 5, wherein initiating the training comprises causing the training content to be displayed on at least one of a display mounted in the vehicle or a mobile device accessible by the operator.

7. The method of any one of claims 4 to 6, further comprising:
updating a status of the ADAS feature to permit the operator to access the ADAS feature in response to completion of the training content; and
storing the updated status of the ADAS feature in a memory device.

8. A system for controlling access to an advanced driver assistance system (ADAS) feature, the system comprising:
a non-transitory computer readable medium configured to store instructions thereon; and
a processor connected to the non-transitory computer readable medium, wherein the processor is configured to execute the instructions for:
determining a completion status of training associated with the ADAS feature by an operator of a vehicle;
prohibiting operation of the ADAS feature in response to a determination that the training associated with the ADAS feature is incomplete; and
permitting the operator to access the ADAS feature in response to a determination that the training associated with the ADAS feature is complete.

9. The system of claim 8, wherein the processor is further configured to execute the instructions for:
capturing identification information of the operator using at least one sensor, wherein the determining the completion status is based on an identity of the operator.

10. The system of claim 8 or 9, wherein the ADAS feature includes at least one of adaptive cruise control (ACC), lane tracing assist (LTA), lane change assist (LCA), highway navigation pilot (HNP), or urban navigation pilot (UNP).

11. The system of any one of claims 8 to 10, wherein the processor is further configured to execute the instructions for:
receiving a selection of a training content;
determining whether initiating of the training content is permissible;
generating an alert in response to a determination that initiating the training content is impermissible; and
initiating the training content in response to a determination that initiating the training is permissible.

12. The system of claim 11, wherein determining whether initiating the training content is permissible is based on at least one of a state of charge (SOC) for the vehicle or a determination regarding whether the vehicle is in a stable training state.

13. The system of claim 11 or 12, wherein initiating the training comprises causing the training content to be displayed on at least one of a display mounted in the vehicle or a mobile device accessible by the operator.

14. The system of any one of claims 11 to 13, wherein the processor is further configured to execute the instructions for:
updating a status of the ADAS feature to permit the operator to access the ADAS feature in response to completion of the training content; and
storing the updated status of the ADAS feature in a memory device.

15. A vehicle comprising:
an advanced driver assistance system (ADAS), wherein the ADAS includes an ADAS feature;
a non-transitory computer readable medium configured to store instructions thereon; and
a processor connected to the non-transitory computer readable medium and the ADAS, wherein the processor is configured to execute the instructions for:
determining a completion status of training associated with the ADAS feature by an operator of a vehicle;
prohibiting operation of the ADAS feature in response to a determination that the training associated with the ADAS feature is incomplete; and
permitting the operator to access the ADAS feature in response to a determination that the training associated with the ADAS feature is complete.
